# EUROPEAN PATENT APPLICATION

(11) **EP 4 089 895 A1**
(43) Date of publication of application: **16.11.2022**
(21) Application number: 22164073.3
(22) Date of filing: 24.03.2022
(51) Int. Cl.: H02K 41/03, H02K 7/10, H02K 1/34

(54) **ARCHITECTURE AND CONTROL MECHANISM FOR A LINEAR MOTOR DRIVE**

(30) Priority: 13.05.2021 IN 202141021702; 09.11.2021 US 202117522192
(71) Applicant: B/E Aerospace, Inc., Winston-Salem, NC 27105 (US)
(72) Inventor: SENGODAN, Rajkumar, 637406 Namakkal, Tamilnadu (IN)
(74) Representative: Dehns

(57) **Abstract**

An electric linear actuator may include a step-shaped reluctance armature (106). The electric linear actuator may further include a set of stationary excitation coils which are excited by a controller. The controller applies direct current voltage to the stationary excitation coils in an excitation sequence. The excitation sequence may be provided in a linear sequence for translating the armature (106) in a forward linear motion followed by a reverse linear motion. The armature (106) may also be coupled with a piston rod. By the coupling, the piston rod (108) may travel between multiple positions. No rotating ball screw or hydraulic pressure is required to provide multiple position linear displacement. The electric linear actuator may also include a lock solenoid (128). The lock solenoid (128) may lock the piston rod (108) at each of the positions when no energy is being supplied.

## Description

### CROSS-REFERENCE TO RELATED APPLICATIONS

The present application claims the benefit of India Provisional Patent Application 202141021702, filed May 13, 2021, titled ARCHITECTURE AND CONTROL MECHANISM FOR A LINEAR MOTOR DRIVE, naming Rajkumar Sengodan as inventor.

### BACKGROUND

Linear hydraulic drives provide linear displacement. A position of the linear hydraulic drives may be measured by a sensor. Based on the position measurements from the sensor, the linear hydraulic drives may be selectively controlled. By the selective control, the linear hydraulic drives may provide selective stroke length between positions. The linear hydraulic drives may then be held at the desired stroke. However, linear hydraulic drives may also require complex installation. Additionally, linear hydraulic drives may require maintenance, due to the pressurized hydraulic fluid.

Therefore, it would be advantageous to provide a device, system, and method that cures the shortcomings described above.

### SUMMARY

Linear electric motors provide a solution for controlling a linear motion in a variety of applications. For example, the linear electric motors may provide multiple position linear movement. The linear motors may provide lower operating and maintenance costs, high efficiency, high speed, precise position, and more flexible motion than linear hydraulic drives.

An electric linear actuator is disclosed, in accordance with one or more embodiments of the present disclosure. In one embodiment, the electric linear actuator includes a casing defining a cylindrical bore including an inside diameter. In another embodiment, the electric linear actuator includes coils aligned in a linear array around the cylindrical bore such that a central axis of each of the coils is aligned with a central axis of the cylindrical bore. In another embodiment, the coils are configured to carry electrical current to generate a magnetic field within the cylindrical bore. In another embodiment, the electric linear actuator includes an armature received within the cylindrical bore. In another embodiment, the armature includes a first end portion, a second end portion, and a middle portion between the first end portion and the second end portion. In another embodiment, the middle portion includes an outside diameter larger than an outside diameter of the first end portion and larger than an outside diameter of the second end portion. In another embodiment, the outside diameter of the middle portion is smaller than the inside diameter of the cylindrical bore. In another embodiment, armature is a ferromagnetic material such that the armature is configured to translate along the central axis of the cylindrical bore in response to the magnetic field generated by the coils. In another embodiment, the electric linear actuator includes a piston rod coupled with the armature such that the piston rod translates by the translation of the armature. In another embodiment, the electric linear actuator includes a switching circuit coupled to the coils. In another embodiment, the switching circuit selectively provides electrical current to the plurality of coils for changing a position of the magnetic field along the cylindrical bore. In another embodiment, the position of the magnetic field along the cylindrical bore causes a translation of the armature to a null point in which the magnetic field finds a least reluctance path through the middle portion of the armature.

An electric linear actuator is disclosed, in accordance with one or more embodiments of the present disclosure. In one embodiment, the electric linear actuator includes a casing. In another embodiment, the casing includes a housing conduit including recesses. In another embodiment, the casing includes a guide cylinder coupled within the housing conduit. In another embodiment, the guide cylinder includes a cylindrical bore with an inside diameter. In another embodiment, the electric linear actuator includes a lock solenoid coupled to the guide cylinder. In another embodiment, the electric linear actuator includes coils coupled to the housing conduit within the recesses. In another embodiment, the coils are aligned in a linear array around the cylindrical bore such that a central axis of each of the coils is aligned with a central axis of the cylindrical bore. In another embodiment, the coils are configured to carry electrical current to generate a magnetic field within the cylindrical bore. In another embodiment, the electric linear actuator includes an armature received within the cylindrical bore. In another embodiment, the armature includes a first end portion, a second end portion, and a middle portion disposed between the first end portion and the second end portion. In another embodiment, the middle portion includes an outside diameter larger than an outside diameter of the first end portion and larger than an outside diameter of the second end portion. In another embodiment, the outside diameter of the middle portion is smaller than the inside diameter of the cylindrical bore. In another embodiment, the armature includes a ferromagnetic material such that the armature is configured to translate along the central axis of the cylindrical bore in response to the magnetic field generated by the plurality of coils. In another embodiment, the electric linear actuator includes a piston rod coupled to the armature such that the piston rod translates by the translation of the armature. In another embodiment, the piston rod includes grooves disposed along a length of the piston rod. In another embodiment, the lock solenoid is configured to prevent translation of the piston rod by being inserted into one of the grooves. In another embodiment, the electric linear actuator includes a switching circuit coupled to the plurality of coils. In another embodiment, the switching circuit is configured to selectively provide electrical current to the plurality of coils for changing a position of the magnetic field along the cylindrical bore. In another embodiment, the position of the magnetic field along the cylindrical bore causes a translation of the armature between null points.

### BRIEF DESCRIPTION OF THE DRAWINGS

Implementations of the concepts disclosed herein may be better understood when consideration is given to the following detailed description thereof. Such description refers to the included drawings, which are not necessarily to scale, and in which some features may be exaggerated, and some features may be omitted or may be represented schematically in the interest of clarity. Like reference numerals in the drawings may represent and refer to the same or similar element, feature, or function. In the drawings:
FIG. 1A depicts an isometric view of an electric linear actuator, in accordance with one or more embodiments of the present disclosure.
FIGS. 1B-1D depicts a cross-section of an electric linear actuator, in accordance with one or more embodiments of the present disclosure.
FIG. 2 depicts a switching circuit of an electric linear actuator, in accordance with one or more embodiments of the present disclosure.
FIG. 3A depicts control logic for a switching sequence of a four-coil electric linear actuator, in accordance with one or more embodiments of the present disclosure.
FIG. 3B depicts a coil current diagram for a four-coil electric linear actuator, in accordance with one or more embodiments of the present disclosure.
FIG. 4A-4G depicts a forward linear motion of a four-coil electric linear actuator, in accordance with one or more embodiments of the present disclosure.

### DETAILED DESCRIPTION OF THE INVENTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure.

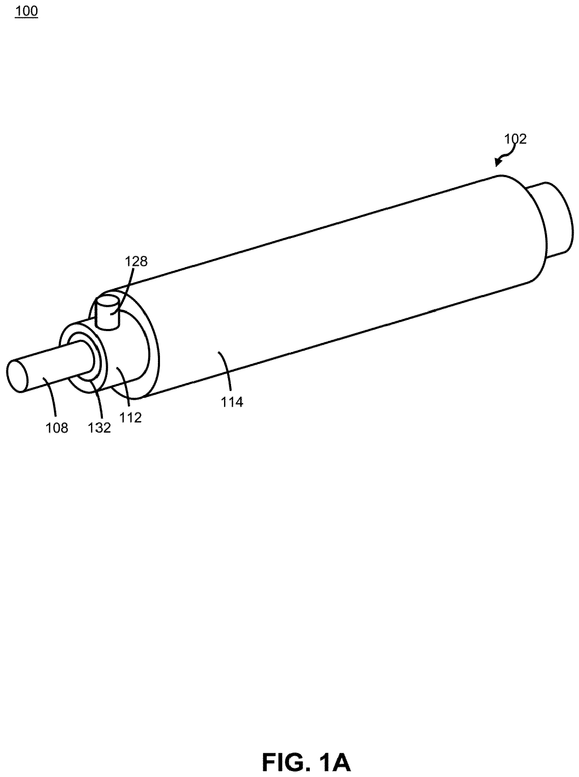

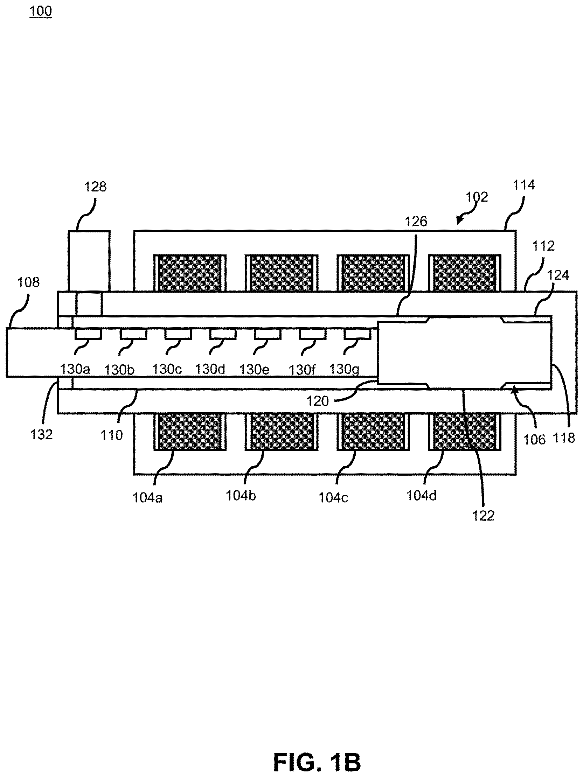

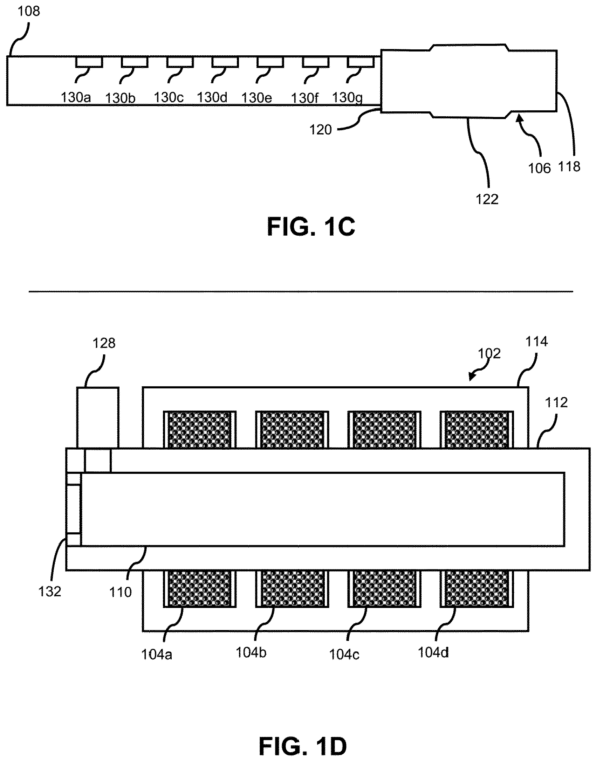

Reference will now be made in detail to the subject matter disclosed, which is illustrated in the accompanying drawings. Referring now to FIGS. 1A-1B, an electric linear actuator 100 is described, in accordance with one or more embodiments of the present disclosure. The electric linear actuator may include one or more of a casing 102, multiple coils 104, an armature 106, and a piston rod 108. The electric linear actuator 100 may achieve multiple position linear displacement. Such electric linear actuator 100 may be used in various environments, such as a mechanical system in an aircraft, an automobile and industrial equipment.

The casing 102 may define a cylindrical bore 110. The cylindrical bore 110 may include an inside diameter in which various components are configured to be received within and translate relative to, such as, but not limited to, the armature 106 and at least a portion of the piston rod 108. The casing 102 may include a guide cylinder 112 and a housing conduit 114. The guide cylinder 112 may include the cylindrical bore 110. The guide cylinder 112 may be coupled to the housing conduit 114. For example, the guide cylinder 112 may be coupled with the housing conduit 114 by any suitable fastening means, such as, but not limited to, an interference fit. In this regard, an outer diameter of the guide cylinder 112 may be larger than an inside diameter of the housing conduit 114. The housing conduit 114 may also include one or more recesses (e.g., cylindrical recesses). The coils 104 may fit within the recesses such that the coils form a linear array around the cylindrical bore 110. In embodiments, the guide cylinder 112 includes a gasket between surrounding the cylindrical bore 110, for decreasing friction between the guide cylinder 112 and the armature 106.

The electrical linear actuator 100 may also include coils 104. The coils 104 may be aligned in a linear array around the cylindrical bore 110 (e.g., by the recesses of the housing conduit 114). By the linear array of the coils 104 around the cylindrical bore 110, a central axis of each of the coils 104 may be aligned with a central axis of the cylindrical bore 110. This alignment may be beneficial in uniformly distributing a magnetic field generated by the coils 104 within the cylindrical bore 110. In this regard, the coils 104 may be configured to carry an electrical current. By carrying the electrical current, the coils 104 may generate a magnetic field within the cylindrical bore 110. The coils 104 may include any suitable material for generating a magnetic field in response to a current, such as, but not limited to, a copper material. The copper material may be surrounded by various insulative material for preventing a short of the electrical current. The coil 104 may include any suitable shape of wire, such as, but not limited to, a spiral or a helix. The coil 104 may also include any number of turns, depending upon a desired magnetic force. An electrical connector having one or more terminals may extend from the casing 102. The electrical connector may supply a voltage difference to the coils 104, such that a current is induced to flow through the coils 104. In embodiments, the coil excitation current may be adjusted to meet the load to drive. In this regard, a larger current may be passed through the coil 104 for translating a larger load.

In embodiments, the coils 104 may be selectively energized for selectively positioning the armature 106. For example, the coils 104 may be sequentially energized for achieving forward and reverse linear motion. In embodiments, the armature 106 may be selectively positioned or translated between multiple null points 116 disposed along the axis of the cylindrical bore 110. In this regard, the null point 116 may be defined as a point at which a lowest path of magnetic reluctance is followed by the armature 106. When the armature is disposed at the null point, the armature may be in equilibrium such that the armature experiences no translation due to the magnetic field, until a switching circuit changes which coils are provided with current. The number of coils 104 may determine the number of null points 116 between which the armature 106 may be translated. The number of null points 116 may be equal to two times the number of coils 104 minus one (i.e., Null Points = 2 * Coils - 1). For example, the electrical linear actuator may include four coils 104a-104d and the armature 106 may be translated between seven null points 116 (e.g., Points 1-7) The null points may generally be located at a midpoint of the coil or a midpoint between adjacent coils, depending on which coils are currently energized. For example, one of the coils 104 may be provided with a current, such that the null point 116 may be located a mid-point of the coil 104. By way of another example, two of the coils 104 which are adjacent may be provided with a current, such that the null point 116 may be located between the coils 104.

Although the electric linear actuator 100 is depicted with four coils 104a-104d, this is not intended to be a limitation of the present disclosure. In this regard, the electric linear actuator 100 may include any number of coils 104 for achieving a desired stroke length of the piston rod 108. Similarly, the coils 104 are depicted with a width, although this is not intended to be a limitation on the present disclosure. In this regard, a width of the coils may be selected based on a desired step length between null points, and subsequently an amount of travel by the piston rod 108. Where a width of the coils 104 is increased, a fewer number of coils 104 may be required to reach a desired stroke length of the piston rod 108. Similarly, as a width of the coils 104 decreases, a larger number of coils 104 may be required to reach a desired stroke length. Thus, the accuracy of positioning of the piston rod 108 depends on the distance between null points 116 or regions. Different applications of the electric linear actuator 100 may require different accuracy of the piston rod 108. In this regard, the number of coils 104 and the distance between coils 104 may be selected based on the desired application, such as, but not limited to, an aircraft seating application where seven seating positions are desirable.

In embodiments, the armature 106 may include a ferromagnetic material. By the ferromagnetic material, the armature 106 may produce a force and be translated in response to a magnetic field (e.g., a magnetic field generated by one or more coils 104). For example, the ferromagnetic material may include any ferromagnetic material, such as, but not limited to, a soft magnetic material (e.g., laminated silicon steel).

The coils 104 may be energized by applying a voltage to terminals of an electrical connector (e.g., a pinout connector for coils 104a-104d). A difference in voltage between the two terminals of the coils 104 causes a current to flow through the coils 104. The current flowing through the coils 104 results in generation of a magnetic field. When the magnetic field becomes large enough to overcome the external load connected to the piston rod 108, the magnetic field will induce motion in the armature 106, the piston rod 108, and the load coupled to the piston rod 108.

When one or more of the coils 104 are energized, a magnetic force on the armature 106 is in the direction that reduces reluctance. Thus, the armature 106 is pulled from an unaligned position into a null point 116 in which the middle portion 122 of the armature 106 is aligned with the magnetic field, due to magnetic field experiencing a lowest reluctance path through the middle portion 122. Thus, the geometry of the armature 106 may contribute a higher or lower magnetic reluctance with respect to the magnetic field, depending upon a position of the armature 106 relative to the magnetic field. The geometry of the armature 106 and amount of current to the coils 104 can be adjusted to meet the required force to drive a specific load. The proposed architecture of the armature 106 can be utilized for various types of load displacement.

The armature 106 may include a first end portion 118, a second end portion 120, and a middle portion 122 between the first end portion 118 and the second end portion 120. Each of the first end portion 118, the second end portion 120, and the middle portion 122 may include a circular shape having an outside diameter. The outside diameter of the middle portion 122 may be larger than both of the outside diameter of the first end portion 118 and the outside diameter of the second end portion 120. Additionally, the outside diameters of the first end portion 118 and the second end portion 120 may extend for a width along the armature 106. For example, the armature 106 may be a stepped cylinder with a step on both sides of the middle portion 122, such that the first end portion 118 and the second end portion 120 extend for a distance before meeting with the middle portion 122. The first end portion 118 and the second end portion 120 may then be connected to the middle portion 122 by a beveled edge such as a chamfer or fillet. In this regard, the armature 106 may be formed by a turning operation on a solid block of bar stock.

In embodiments, the electric linear actuator 100 includes one or more air gaps between the armature 106 and the cylindrical bore 110. A distance between the first end portion 118 of the armature 106 and the cylindrical bore 110 defines an air gap 124 (e.g., due to the outside diameter of the first end portion 118 being smaller than the inside diameter of the cylindrical bore 110). Similarly, a distance between the second end portion 120 of the armature 106 and the cylindrical bore 110 defines an air gap 126 (e.g., due to the outside diameter of the second end portion 120 being smaller than the inside diameter of the cylindrical bore 110). The first end portion 118 of the armature 106 may contribute a higher magnetic reluctance with respect to the magnetic field than the middle portion 122 of the armature 106 because of to the air gap 124. Similarly, the second end portion 120 of the armature 106 may contribute a higher magnetic reluctance with respect to the magnetic field than the middle portion 122 of the armature 106 because of the air gap 126. Based on the direction of current flow through the coil 104, a first end portion of the coil 104 will form a magnetic north pole and a second end portion of the coil 104 will form a magnetic south pole. Due to the air gaps 124, 126, the armature 106 will come to rest at the null point 116 because the magnetic field formed by the coil 104 will find a lowest reluctance path through the middle portion 122 of the armature 106. In embodiments, a width of the middle portion 122 of the armature 106 may be substantially similar to the width of each of the coils 104. In this regard, when the armature 106 is in a null point 116 which is aligned with the coil 104, the first end portion 118 and the second end portion 120 may extend beyond the coil 104. The size of the armature 106 and the coils 104 may be adjusted to meet a required force.

The piston rod 108 may be coupled with the armature 106. In this regard, translation of the armature 106 by the magnetic fields generated by the coils 104, may cause a similar translation of the piston rod 108. Thus, by selectively engaging the coils 104, the piston rod 108 may be selectively positioned to multiple points without the need for a hydraulic actuator or rotating ball screw. In embodiments, the piston rod 108 includes a cylindrical shape, with an outside diameter. The outside diameter of the piston rod 108 may be less than the outside diameters of the first end portion 118 and the second end portion 120.

In embodiments, the armature 106 comprises a cavity including an inside diameter (not depicted). The cavity may extend between the first end portion 118 and the second end portion 120. The piston rod 108 may be coupled to the armature 106 by the cavity. For example, the outside diameter of the piston rod 108 may be larger than the inside diameter of the armature 106. The piston rod 108 may thus be coupled with the armature 106 by an interference fit. Although the armature 106 is described as including a cavity by which the piston rod 108 is coupled, this is not intended as a limitation on the present disclosure. The armature 106 may be coupled with the piston rod 108 in any suitable fashion, such as, but not limited to, a set screw, a weld, a keyway, or formed as a part of the rod (e.g., by turning on a lathe). In embodiments, one or more vibration attenuators (not depicted) are disposed between the piston rod 108 and the armature 106. The vibration attenuators may reduce external vibrations.

The piston rod 108 may include a working end which is disposed outside of the casing 102. The working end of the piston rod 108 may provide linear actuation to an object to which the piston rod 108 is coupled. In embodiments, the working end of the piston rod 108 may include a rod end (not depicted), such as, but not limited to, a ball joint rod end. The rod end may be application specific, such as, but not limited to, an aircraft application.

The piston rod 108 may include one or more grooves 130. The grooves 130 may be disposed on an outer surface of the piston rod 108. The grooves 130 may also be disposed in a linear array on the piston rod 108. For example, a distance between the grooves 130 may be equal to a distance between the null points 116. When the armature 106 is aligned with one of the null points 116, one of the grooves 130 may be aligned with a lock solenoid assembly 128. In this regard, the lock solenoid assembly 128 may be configured to lock the piston rod 108 (and similarly the armature 106) when the armature 106 is positioned at the null point by the grooves 130. The electric linear actuator 100 may include the lock solenoid assembly 128.

The lock solenoid assembly 128 may be coupled to the guide cylinder 112 of the casing. The lock solenoid assembly 128 may include a solenoid coil, an internal plunger, and a spring mechanism (e.g., a pull-type solenoid with an internal spring). The lock solenoid assembly 128 may include an energized and a deenergized state. When the armature 106 and the piston rod 108 are stationary, the lock solenoid assembly 128 is deenergized. In the deenergized state, at least a portion of the lock solenoid 128 is inserted within one of the grooves 130, for preventing translation of the armature 106 and the piston rod 108. For example, the spring mechanism may provide a spring force to push the internal plunger into the groove 130. When the armature 106 moves from one position to another; the lock solenoid 128 is energized. In the energized state, the lock solenoid 128 is removed from the grooves 130, such that the armature 106 and the piston rod 108 may translate. For example, the solenoid coil of the lock solenoid assembly 128 may be provided with power, to generate a magnetic field which overcomes the spring force of the spring mechanism and pulls the internal plunger free of the groove 130. By the lock solenoid 128 a power required by the electric linear actuator 100 in a locked state may be negligible. While stationary, the coil 104 and lock solenoid 128 may not be provided with power. This reduces a power consumption required by the electric linear actuator 100. In this regard, the electric linear actuator 100 only requires power when unlocking the lock solenoid 128 and translating between null points. Thus, such lock solenoid 128 and grooves 130 may be used to reduce a power requirement of the electric linear actuator 100 for holding the piston rod 108 at the desired position. Although the electric linear actuator 100 is described as including a lock solenoid 128 and a piston rod 108 with grooves 130, this is not intended as a limitation on the present disclosure. In embodiments, the electric linear actuator 100 may hold the piston rod 108 at the desired position by continuously providing power to the coils 104.

In embodiments, the position of the armature 106 is sensed by measuring the inductance of the coils 104. When the armature 106 is at a particular position, the inductance of an associated coil 104 would be greater as compared to other coils 104.

In embodiments, the guide cylinder 112 includes a bearing 132 coupled to an opening of the cylindrical bore 110. The bearing 132 may provide an interface between the piston rod 108 and the cylindrical bore 110.

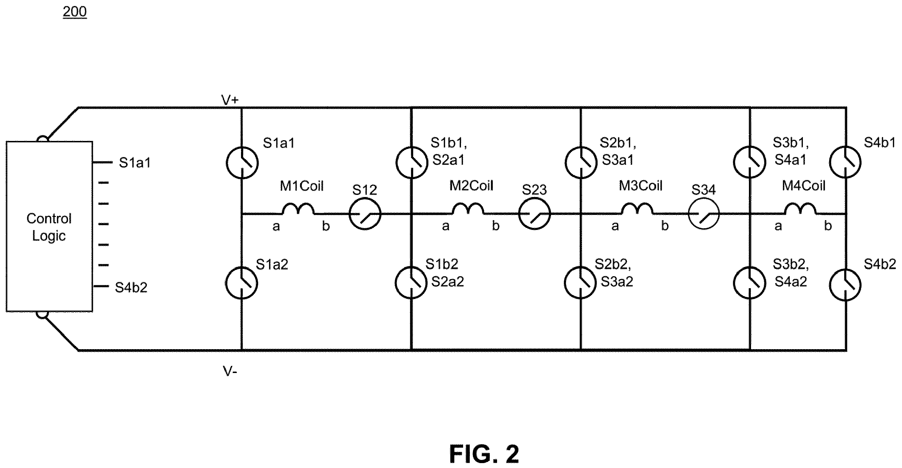

Referring now to FIG. 2, a switching circuit 200 for the electric linear actuator 100 is described, in accordance with one or more embodiments of the present disclosure. The coils 104 of the electric linear actuator 100 may be energized in a sequence, for selectively positioning the armature 106 and the piston rod 108. By the switching circuit 200, a pathway may be selectively formed between the coils 104 and a positive voltage terminal (V+) and negative voltage terminal (V-), thereby generating the current through the coils 104. For example, the switching circuit 200 depicted in FIG. 2 represents coils M1 Coil (also referred to as coil 104a), M2Coil (also referred to as coil 104b), M3Coil (also referred to as 104c), and M4Coil (also referred to as coil 104d). As may be understood, a similar architecture may be expanded or reduced for a desired number of the coils 104.

The switching circuit 200 may include a control logic connected to one or more switches (e.g., S1a1-S4b2, S12-S34, etc.). The control logic may include a microcontroller or a discrete logic circuit. The control logic outputs are connected to the switches, which establish the sequenced on/off switching mechanism as implemented by the exemplary switching sequence 300 and coil current diagram 302. In this regard, the control logic may include a processor and a memory, the memory including program instructions maintained on the memory which are executable by the processor. Such program instructions may implement the switching sequence 300 and coil current diagram 302, in accordance with one or more embodiments of the present disclosure. The processor may include any processor known in the art and may be broadly defined to encompass any device having one or more processing or logic elements (e.g., one or more micro-processor devices, one or more application specific integrated circuit (ASIC) devices, one or more field programmable gate arrays (FPGAs), or one or more digital signal processors (DSPs)). Similarly, the memory may include any storage medium known in the art suitable for storing program instructions executable by the associated one or more processors such as but not limited to a non-transitory storage medium (e.g., a read-only memory (ROM), a random-access memory (RAM), a magnetic or optical memory device (e.g., disk), a magnetic tape, a solid-state drive).

When the switches (e.g., S1a1-S4b2, S12-S34, etc.) receive power, the switches may change from an open-circuit to a closed-circuit configuration or change from a closed-circuit to an open-circuit configuration. For example, the switches may include solid-state switches which are defaulted to an open-circuit configuration but which change to a closed-circuit configuration under power. In this regard, the switches may include any switches, such as, but not limited to a metal-oxide-semiconductor field-effect transistor (MOSFET).

In embodiments, the switching circuit 200 is configured to selectively switch the direction in which current flows through the coils 104. Each coil 104 may include a first side (e.g., side a) and a second side (e.g., side b). The coils 104 may be selectively switched such that current may flow from either side of the coil 104. The coils 104 may be switched such that current flows from the first side to the second side (i.e., a to b) to generate a magnetic field tending to translate the armature 106 towards the opening of the cylindrical bore 110. Similarly, the coils 104 may be switched such that current flows from the second side to the first side (i.e., b to a) to generate a magnetic field tending to translate the armature 106 away from the opening of the cylindrical bore 110.

In embodiments, the switching circuit 200 may include an H-bridge configuration of switches for each coil 104. Each coil 104 may include two switches for each side of the coil (e.g., switches S1a1-S4b2). In this regard, the first side of each coil 104 may include a switch connecting to a positive terminal and a switch connecting to a negative terminal. Similarly, the second side of each coil 104 may include a switch connecting to the positive terminal and a switch connecting to the negative terminal. For example, M1Coil (also referred to as coil 104a) may include a switch S1a1 connecting the first side (side a) to a positive voltage terminal (V+), a switch S1a2 connecting the first side (side a) to a negative voltage terminal (V-), a switch S1b1 connecting the second side (side b) to the positive voltage terminal (V+), and a switch S1b2 connecting the second side (side b) to the negative voltage terminal (V-). By way of another example, M2Coil (also referred to as coil 104b), may include a switch S2a1 connecting the first side (side a) to a positive voltage terminal (V+), a switch S2a2 connecting the first side (side a) to a negative voltage terminal (V-), a switch S2b1 connecting the second side (side b) to the positive voltage terminal (V+), and a switch S2b2 connecting the second side (side b) to the negative voltage terminal (V-). By way of another example, M3Coil (also referred to as coil 104c), may include a switch S3a1 connecting the first side (side a) to a positive voltage terminal (V+), a switch S3a2 connecting the first side (side a) to a negative voltage terminal (V-), a switch S3b1 connecting the second side (side b) to the positive voltage terminal (V+), and a switch S3b2 connecting the second side (side b) to the negative voltage terminal (V-). By way of another example, M4Coil (also referred to as coil 104d) may include a switch S4a1 connecting the first side (side a) to a positive voltage terminal (V+), a switch S4a2 connecting the first side (side a) to a negative voltage terminal (V-), a switch S4b1 connecting the second side (side b) to the positive voltage terminal (V+), and a switch S4b2 connecting the second side (side b) to the negative voltage terminal (V-).

In embodiments, the switching circuit 200 may be configured to provide electrical current to adjacent coils in series. The coils 104 may be coupled to an adjacent coil by a switch (e.g., switches S12-S34). By coupling the coils 104 which are adjacent, the switching circuit 200 may be configured to provide current to the coils 104 in series. For example, the M1Coil and the M2Coil may be connected in series by the switch S12 (e.g., by switching on switches S1a2, S12, and S2b1; by switching on switches S1a1, S12, and S2b2). By way of another example, the M2Coil and the M3Coil may be connected in series by the switch S23 (e.g., by switching on switches S2a2, S23, and S3b1; by switching on switches S2a1, S23, and S3b2). By way of another example, the M3Coil and the M4Coil may be connected in series by the switch S34 (e.g., by switching on switches S3a2, S34, and S4b1; by switching on switches S3a1, S34, and S4b2).

In embodiments, coils 104 which are adjacent may share one or more switches for connecting to the positive terminal (V+) or the negative terminal (V-). By the shared switch, the switching circuit 200 may require fewer switches for providing power to the coils 104. In this regard, the coils 104 may share one or more sides of the H-bridge with an adjacent coil. For example, the switch S1b1 may couple side b of the M1Coil with the positive terminal. The switch S2a1 may couple side a of the M2Coil with the positive terminal. The switch S1b1 and the switch S2a1 may be the same switch. In this regard, with the switch S1b1/S2a1 switched on, a line between side b of M1 coil and the positive terminal may be closed and a line between side a of the M2 coil and the positive terminal may be closed. By way of another example, the switch S1b2 and the switch S2a2 may be the same. By way of another example, the switch

Although the switching circuit 200 is described as including a shared switch for connecting adjacent coils 104 to the positive or the negative terminal, this is not intended as a limitation on the present disclosure. For example, the switch S12 is depicted between M1Coil and the switch S1b1/S2a1 and between M1Coil and the switch S1b2/S2a2. Instead, the switch S1b1 may be directly coupled with M1Coil, with the switch S12 separating the switch S1b1 from the switch S2a1. Similarly, the switch S1b2 may be directly coupled with the M1Coil, with the switch S12 separating the switch S1b2 from the switch S2a2.

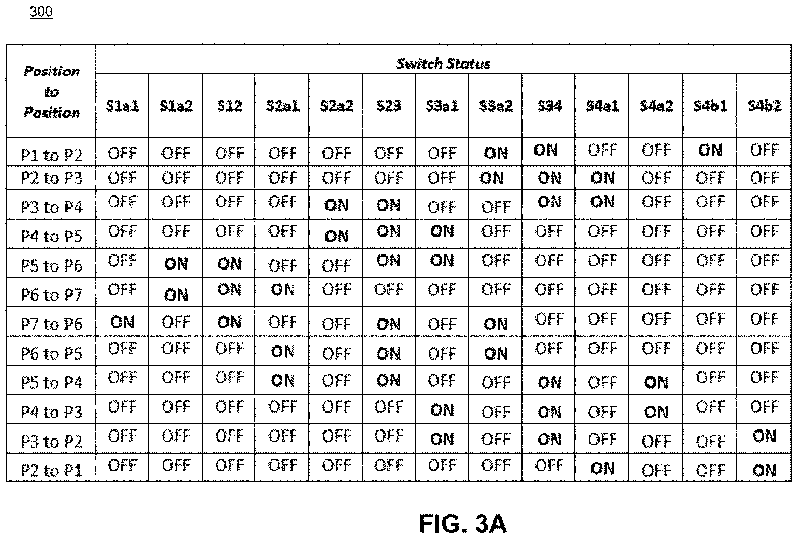

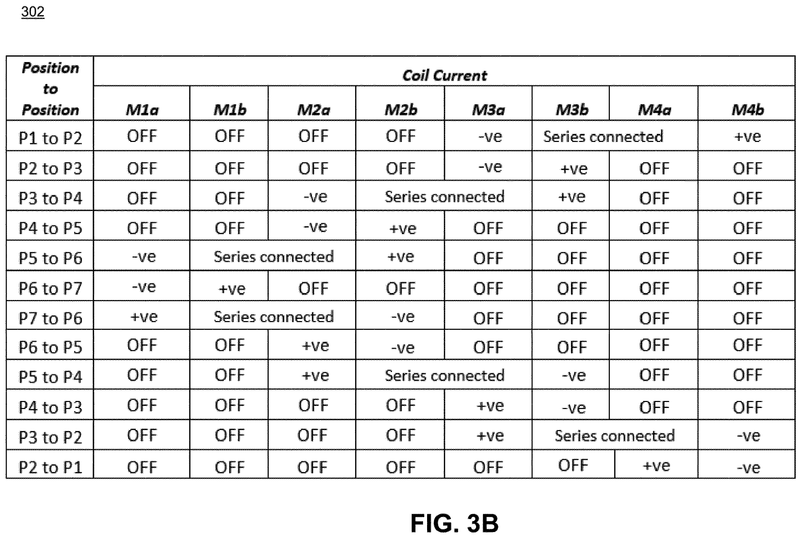

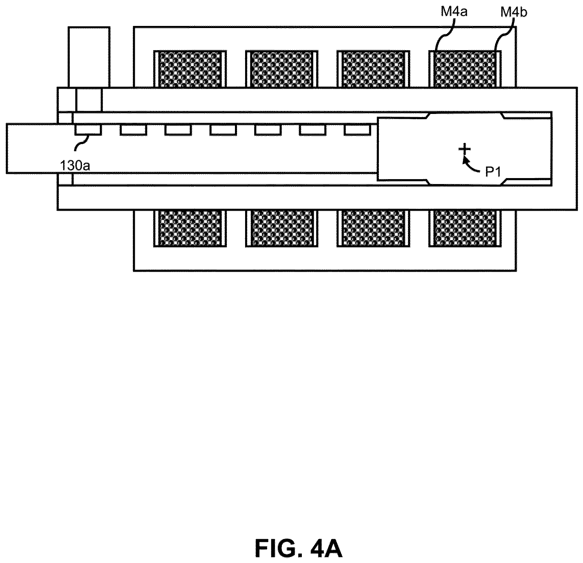

Referring now to FIGS. 3A-3B, a switching sequence 300 and a coil current diagram 302 of the electric linear actuator 100, is described in accordance with one or more embodiments of the present disclosure. Although the switching sequence 300 and the coil current diagram 302 is depicted for a four-coil configuration, this is not intended as a limitation on the present disclosure. Consider that the armature 106 is to be moved between null points 116 for providing forward linear motion of the piston rod 108 (e.g., position P1 to position P2, position P2 to position P3, etc.). The switches may be energized in sequence according to the switch status 300 of FIG. 3A, causing the coil current diagram 302 of FIG. 3B, and subsequently linearly translating the armature 106 and the piston rod 108 forward in incremental steps. See FIGS. 4A-4G for a depiction of forward linear motion between position P1 and position P7. Consider also that the armature 106 is to be moved between null points 116 for providing reverse linear motion of the piston rod 108 (e.g., position P7 to position P6, position P6 to position P5, etc.). The switches may be energized in sequence according to the switch status 300 of FIG. 3A, causing the coil current diagram 302 of FIG. 3B, and subsequently linearly translating the armature 106 and the piston rod 108 forward in incremental steps.

Referring generally to FIGS. 4A-4G, positioning of the electric linear actuator 100 is described, in accordance with one or more embodiments of the present disclosure.

Referring now to FIG. 4A, a position (P1) of the electric linear actuator 100 is described. Consider the armature 106 is in position (P1), such that the middle portion 122 is in-line with coil 104d. The lock solenoid 128 may be in an off-state, such that the lock solenoid 128 will hold the armature 106 and piston rod 108 in a stationary position irrespective of the coil 104d voltage. By default, a plunger of the lock solenoid 128 is engaged with groove 130g of the piston rod by a spring mechanism. Upon excitation of a voltage to a solenoid coil of the lock solenoid 128, the plunger of the lock solenoid 128 will disengage from the groove 130a of the piston rod 108.

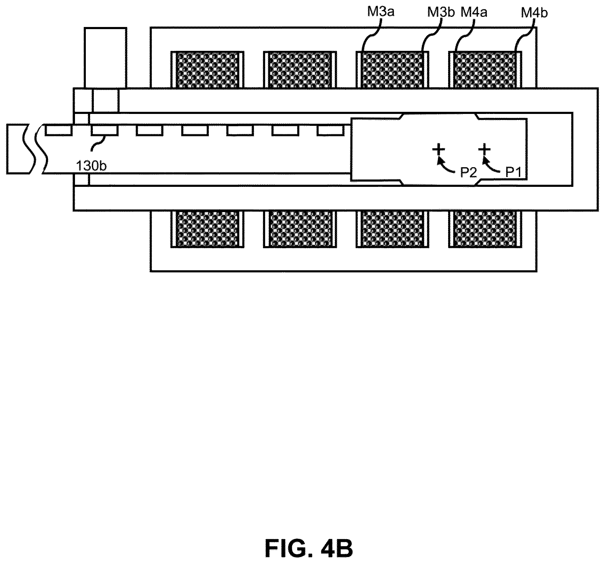

Referring now to FIG. 4B, a position (P2) of the electric linear actuator 100 is described. Consider the armature 106 is to be shifted from position (P1) to position (P2), such that the middle portion 122 is between coil 104c and coil 104d. The lock solenoid 128 is disengaged to allow the armature 106 and the piston rod 108 to translate. The coil 104c and 104d are excited to move the armature 106 linearly. To energize the coils 104c and 104d, the electronic control circuit establishes voltage to the coil 104c and the coil 104d in series, such that the current flows from node M4b to node M3a. With this configuration, the node M4b will form a South Pole and the node M3a will form a North Pole, due to the direction of current flow. The armature 106 is pulled by the magnetic field by the interaction of the magnetic field with the ferromagnetic material. The area of the second end portion 120 of the armature 106 will provide a high reluctance as compared to the middle portion 122 of the armature 106. Therefore, the armature 106 is pulled by the magnetic field to attain a low reluctance path through the middle portion 122. Once the middle portion 122 of the armature 106 is aligned between the node M4b of the coil 104d and the node M3a of the coil 104c, an equilibrium occurs between the North and South Poles. This region is considered the one of the null points 116 and the armature 106 would rest in position (P2). Optionally, the lock solenoid 128 may be disengaged by turning-off its solenoid coil current to release the plunger within the groove 130b (i.e., lock solenoid in OFF state). If the lock solenoid is locking the piston rod 108, the voltage applied to the coil 104c and coil 104d may be removed.

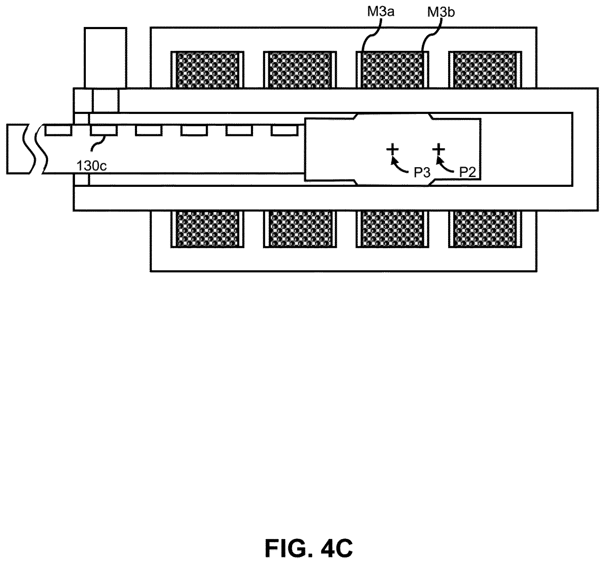

Referring now to FIG. 4C, a position (P3) of the electric linear actuator 100 is described. Consider the armature 106 is to be shifted from position (P2) to position (P3), such that the middle portion 122 is in-line with coil 104c. The lock solenoid 128 is disengaged to allow the armature 106 and the piston rod 108 to translate. The coil 104c is excited to move the armature 106 linearly. To energize the coil 104c, the electronic control circuit establishes voltage to the coil 104c, such that the current flows from node M3b to node M3a. With this configuration, the node M3b will form a South Pole and the node M3a will form a North Pole, due to the direction of current flow. The armature 106 is pulled by the magnetic field by the interaction of the magnetic field with the ferromagnetic material. The area of the second end portion 120 of the armature 106 will provide a high reluctance as compared to the middle portion 122 of the armature 106. Therefore, the armature 106 is pulled by the magnetic field to attain a low reluctance path through the middle portion 122. Once the middle portion 122 of the armature 106 is aligned between the node M3b and the node M3a of the coil 104b, an equilibrium occurs between the North and South Poles. This region is considered one of the null points 116 and the armature 106 would rest in this position (P3). Optionally, the lock solenoid 128 may be disengaged by turning-off its solenoid coil current to release the plunger within the groove 130c (i.e., lock solenoid in OFF state). If the lock solenoid is locking the piston rod 108, the voltage applied to the coil 104c may be removed.

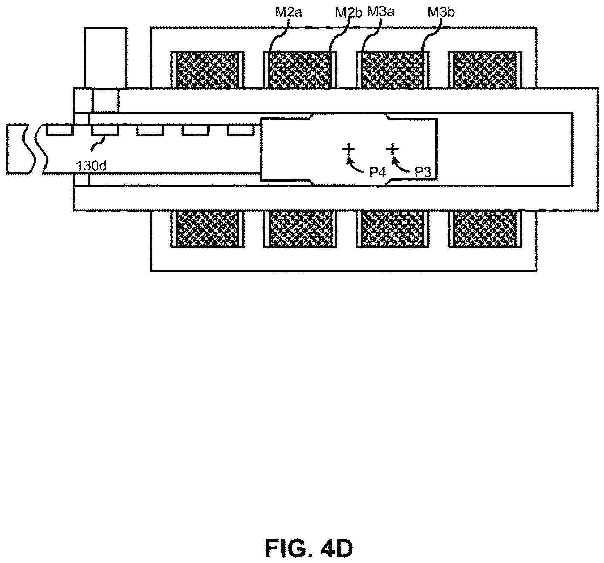

Referring now to FIG. 4D, a position (P4) of the electric linear actuator 100 is described. Consider the armature 106 is to be shifted from position (P3) to position (P4), such that the middle portion 122 is between coil 104b and coil 104c. The lock solenoid 128 is disengaged to allow the armature 106 and the piston rod 108 to translate. The coil 104b and 104c are excited to move the armature 106 linearly. To energize the coils 104b and 104c, the electronic control circuit establishes voltage to the coil 104b and the coil 104c in series, such that the current flows from node M3b to node M2a. With this configuration, the node M3b will form a South Pole and the node M2a will form a North Pole, due to the direction of current flow. The armature 106 is pulled by the magnetic field by the interaction of the magnetic field with the ferromagnetic material. The area of the second end portion 120 of the armature 106 will provide a high reluctance as compared to the middle portion 122 of the armature 106. Therefore, the armature 106 is pulled by the magnetic field to attain a low reluctance path through the middle portion 122. Once the middle portion 122 of the armature 106 is aligned between the node M3b of the coil 104c and the node M2a of the coil 104b, an equilibrium occurs between the North and South Poles. This region is considered one of the null points 116 and the armature 106 would rest in this position (P4). Optionally, the lock solenoid 128 may be disengaged by turning-off its solenoid coil current to release the plunger within the groove 130d (i.e., lock solenoid in OFF state). If the lock solenoid is locking the piston rod 108, the voltage applied to the coil 104b and coil 104c may be removed.

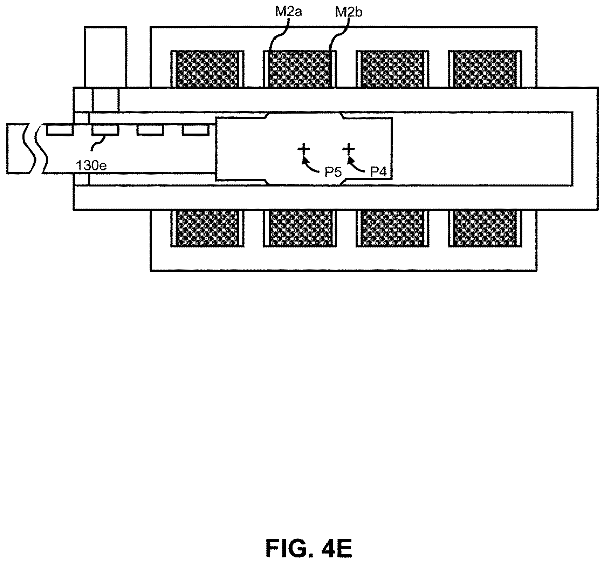

Referring now to FIG. 4E, a position (P5) of the electric linear actuator 100 is described. Consider the armature 106 is to be shifted from position (P4) to position (P5). The lock solenoid is disengaged to allow the armature 106 and the piston rod 108 to translate. The coil 104b is excited to move the armature 106 linearly. To energize the coil 104b, the electronic control circuit establishes voltage to the coil 104b, such that the current flows from node M2b to node M2a. With this configuration, the node M2b will form a South Pole and the node M2a will form a North Pole, due to the direction of current flow. The armature 106 is pulled by the magnetic field by the interaction of the magnetic field with the ferromagnetic material. The area of the second end portion 120 of the armature 106 will provide a high reluctance as compared to the middle portion 122 of the armature 106. Therefore, the armature 106 is pulled by the magnetic field to attain a low reluctance path through the middle portion 122. Once the middle portion 122 of the armature 106 is aligned between the node M2b and the node M2a of the coil 104b, an equilibrium occurs between the North and South Poles. This region is considered one of the null points 116 and the armature 106 would rest in this position. Optionally, the lock solenoid 128 may be disengaged by turning-off its solenoid coil current to release the plunger within the groove 130e (i.e., lock solenoid in OFF state). If the lock solenoid is locking the piston rod 108, the voltage applied to the coil 104b may be removed.

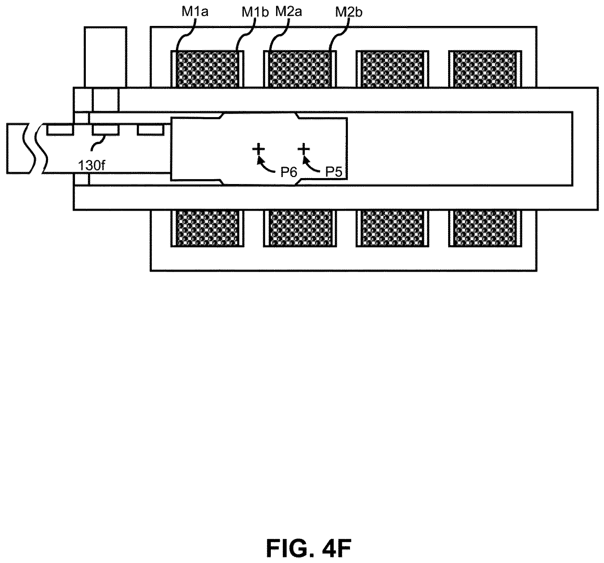

Referring now to FIG. 4F, a position (P6) of the electric linear actuator 100 is described. Consider the armature 106 is to be shifted from position (P5) to position (P6). The lock solenoid is disengaged to allow the armature 106 and the piston rod 108 to translate. The coil 104a and 104b are excited to move the armature 106 linearly. To energize the coils 104a and 104b, the electronic control circuit establishes voltage to the coil 104a and the coil 104b in series, such that the current flows from node M2b to node M1a. With this configuration, the node M2b will form a South Pole and the node M1a will form a North Pole, due to the direction of current flow. The armature 106 is pulled by the magnetic field by the interaction of the magnetic field with the ferromagnetic material. The area of the second end portion 120 of the armature 106 will provide a high reluctance as compared to the middle portion 122 of the armature 106. Therefore, the armature 106 is pulled by the magnetic field to attain a low reluctance path through the middle portion 122. Once the middle portion 122 of the armature 106 is aligned between the node M2b of the coil 104b and the node M1a of the coil 104a, an equilibrium occurs between the North and South Poles. This region is considered one of the null points 116 and the armature 106 would rest in this position (P6). Optionally, the lock solenoid 128 may be disengaged by turning-off its solenoid coil current to release the plunger within the groove 130f(i.e., lock solenoid in OFF state). If the lock solenoid is locking the piston rod 108, the voltage applied to the coil 104a and coil 104b may be removed.

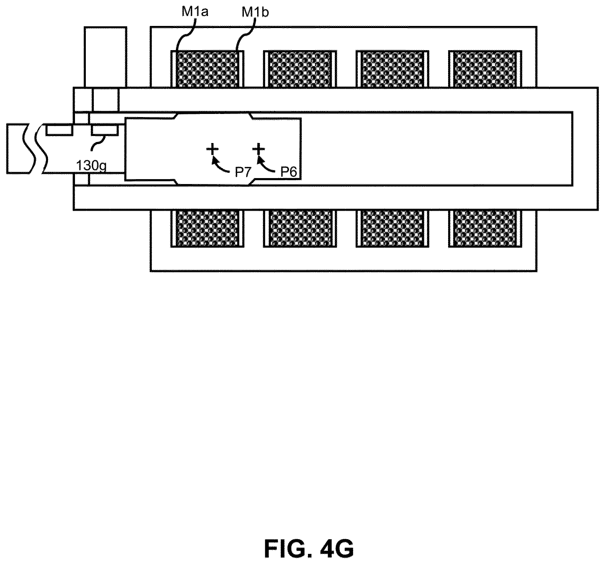

Referring now to FIG. 4G, a position (P7) of the electric linear actuator 100 is described. Consider the armature 106 is to be shifted from position (P6) to position (P7). The lock solenoid is disengaged to allow the armature 106 and the piston rod 108 to translate. The coil 104a is excited to move the armature 106 linearly. To energize the coil 104a, the electronic control circuit establishes voltage to the coil 104a, such that the current flows from node M1b to node M1a. With this configuration, the node M1b will form a South Pole and the node M1a will form a North Pole, due to the direction of current flow. The armature 106 is pulled by the magnetic field by the interaction of the magnetic field with the ferromagnetic material. The area of the second end portion 120 of the armature 106 will provide a high reluctance as compared to the middle portion 122 of the armature 106. Therefore, the armature 106 is pulled by the magnetic field to attain a low reluctance path through the middle portion 122. Once the middle portion 122 of the armature 106 is aligned between the node M1b and the node M1a of the coil 104a, an equilibrium occurs between the North and South Poles. This region is considered one of the null points 116 and the armature 106would rest in this position (P7). Optionally, the lock solenoid 128 may be disengaged by turning-off its solenoid coil current to release the plunger within the groove 130g (i.e., lock solenoid in OFF state). If the lock solenoid is locking the piston rod 108, the voltage applied to the coil 104a may be removed.

Although FIGS. 4A-4G describe forward linear movement of the electric linear actuator, this is not intended as a limitation on the present disclosure. The electric linear actuator may also be configured to achieve reverse linear movement. To achieve reverse linear movement, the electric linear actuator 100 may be operated according to FIGS. 3A-3B (e.g., P7-P1). The principle is similar to forward linear movement as explained above but in the opposite direction. In this operation the first end portion 118 will provide high reluctance and the middle portion 122 is pulled to axial to the null point to achieve a lower reluctance.

It is to be noted that the specific order of steps in the foregoing disclosed methods are examples of exemplary approaches. Based upon design preferences, it is understood that the specific order of steps in the method can be rearranged while remaining within the scope of the present disclosure. It is believed that the present invention and many of its attendant advantages will be understood by the foregoing description. It is also believed that it will be apparent that various changes may be made in the form, construction, and arrangement of the components thereof without departing from the scope and spirit of the present disclosure. The form herein described being an explanatory embodiment thereof.

## Claims

1. An electric linear actuator comprising:
a casing (102) defining a cylindrical bore (110) including an inside diameter;
a plurality of coils (104) aligned in a linear array around the cylindrical bore (110) such that a central axis of each of the plurality of coils is aligned with a central axis of the cylindrical bore, wherein the plurality of coils are configured to carry electrical current to generate a magnetic field within the cylindrical bore;
an armature (106) received within the cylindrical bore (110), the armature comprising a first end portion (118), a second end portion (120), and a middle portion (122) disposed between the first end portion and the second end portion, the middle portion (122) including an outside diameter larger than an outside diameter of the first end portion (118) and larger than an outside diameter of the second end portion (120), wherein the outside diameter of the middle portion (122) is smaller than the inside diameter of the cylindrical bore, wherein the armature (106) comprises a ferromagnetic material such that the armature is configured to translate along the central axis of the cylindrical bore (110) in response to the magnetic field generated by the plurality of coils (104);
a piston rod (108) coupled with the armature (106) such that the piston rod translates by the translation of the armature (106); and
a switching circuit (200) coupled to the plurality of coils (104), wherein the switching circuit is configured to selectively provide electrical current to the plurality of coils for changing a position of the magnetic field along the cylindrical bore (110), wherein the position of the magnetic field along the cylindrical bore causes the translation of the armature (106) to a null point of a plurality of null points in which the magnetic field finds a least reluctance path through the middle portion (122) of the armature.

2. The electric linear actuator of claim 1, wherein the armature (106) is in equilibrium when disposed at the null point such that the armature experiences no translation due to the magnetic field until the switching circuit (200) changes which of the plurality of coils (104) are provided with electrical current.

3. The electric linear actuator of claim 1 or 2, wherein the switching circuit (200) comprises:
a plurality of switches, wherein the plurality of switches are configured to switch states in response to an applied voltage, wherein the plurality of coils (104) are provided with electrical current in an excitation sequence by selectively switching the plurality of switches.

4. The electric linear actuator of claim 3, wherein the plurality of switches are configured to provide electrical current to a first coil of the plurality of coils, wherein the armature (106) is configured to translate to a first null point of the plurality of null points in response to the first coil being provided with power, wherein the first null point is disposed at a midpoint of the first coil.

5. The electric linear actuator of claim 4, wherein the plurality of switches are configured to provide electrical current in series to the first coil and a second coil of the plurality of coils; wherein the first coil and the second coil are adjacent in the linear array; wherein the armature is configured to translate to a second null point of the plurality of null points in response to providing electrical current in series to the first coil and the second coil; wherein the second null point is disposed between the first coil and the second coil, and preferably wherein the plurality of switches are configured to provide electrical current to the second coil; wherein the armature is configured to translate to a third null point of the plurality of null point in response to the second coil being provided with electrical current; wherein the third null point is at a midpoint of the second coil.

6. The electric linear actuator of any preceding claim, wherein a distance between the first end portion (118) of the armature and the cylindrical bore (110) defines a first air gap (124), wherein a distance between the second end portion (120) of the armature and the cylindrical bore (110) defines a second air gap (126), wherein the first end portion (118) of the armature contributes a higher magnetic reluctance with respect to the magnetic field than the middle portion (122) of the armature due at least in part to the first air gap (124), wherein the second end portion (120) of the armature contributes a higher magnetic reluctance with respect to the magnetic field than the middle portion (122) of the armature due at least in part to the second air gap (126).

7. The electric linear actuator of any preceding claim, wherein the casing comprises:
a housing conduit (114) including a plurality of recesses to which the plurality of coils are coupled; and
a guide cylinder (112) coupled within the housing conduit (114), the guide cylinder including the cylindrical bore (110), and preferably further comprising a lock solenoid (128) coupled to the guide cylinder, the lock solenoid including an energized state and a deenergized state, wherein the lock solenoid is configured to prevent translation of the piston rod (108) when the lock solenoid is in the deenergized state, wherein the lock solenoid is configured to allow the translation of the piston rod (108) when the lock solenoid is in the energized state, and more preferably wherein the piston rod (108) includes a plurality of grooves (130) disposed along a length of the piston rod, wherein the lock solenoid (128) is configured to prevent translation of the piston rod by being inserted into one of the plurality of grooves (130), and more preferably wherein the plurality of grooves (130) are disposed at positions along the piston rod (108) corresponding to the plurality of null points.

8. The electric linear actuator of any preceding claim, further comprising a bearing (132) disposed at an opening of the cylindrical bore to provide an interface between the cylindrical bore (110) and the piston rod (108).

9. The electric linear actuator of any preceding claim, further comprising a pair of terminals by which the switching circuit (200) is configured to selectively provide electrical current to the plurality of coils (104).

10. The electric linear actuator of any preceding claim, wherein the armature (106) further comprises a cavity including an inside diameter, wherein the cavity extends between the first end portion (118) of the armature and the second end portion (120) of the armature, wherein the piston rod (108) is coupled to the armature by the cavity.

11. The electric linear actuator of any preceding claim, wherein each of the plurality of coils (104) is disposed adjacent to at least one other coil of the plurality of coils by being aligned in the linear array.

12. The electric linear actuator of any preceding claim, wherein an inductance of the plurality of coils is measured for determining an axial position of the armature.

13. The electric linear actuator of any preceding claim, wherein the switching circuit (200) is configured to selectively provide electrical current to the plurality of coils in an excitation sequence, wherein the excitation sequence comprises a forward linear movement of the armature (106) between the plurality of null points followed by a reverse linear movement of the armature (106) between the plurality of null points.

14. The electric linear actuator of any preceding claim, wherein the plurality of null points corresponds to two times the plurality of coils minus one, and preferably wherein the plurality of coils includes four coils, wherein the plurality of null points includes seven null points.

15. An electric linear actuator, comprising:
a casing (102) comprising:
a housing conduit (114) including a plurality of recesses; and
a guide cylinder (112) coupled within the housing conduit, the guide cylinder including a cylindrical bore (110) with an inside diameter;
a lock solenoid (128) coupled to the guide cylinder;
a plurality of coils (104) coupled to the housing conduit within the plurality of recesses, wherein the plurality of coils are aligned in a linear array around the cylindrical bore such that a central axis of each of the plurality of coils is aligned with a central axis of the cylindrical bore, wherein the plurality of coils are configured to carry electrical current to generate a magnetic field within the cylindrical bore;
an armature (106) received within the cylindrical bore, the armature comprising a first end portion, a second end portion, and a middle portion disposed between the first end portion and the second end portion, the middle portion including an outside diameter larger than an outside diameter of the first end portion and larger than an outside diameter of the second end portion, wherein the outside diameter of the middle portion is smaller than the inside diameter of the cylindrical bore, wherein the armature comprises a ferromagnetic material such that the armature is configured to translate along the central axis of the cylindrical bore in response to the magnetic field generated by the plurality of coils;
a piston rod (108) coupled with the armature such that the piston rod translates by the translation of the armature, wherein the piston rod includes a plurality of grooves disposed along a length of the piston rod, wherein the lock solenoid is configured to prevent translation of the piston rod by being inserted into one of the plurality of grooves;
a switching circuit (200) coupled to the plurality of coils, wherein the switching circuit is configured to selectively provide electrical current to the plurality of coils for changing a position of the magnetic field along the cylindrical bore, wherein the position of the magnetic field along the cylindrical bore causes a translation of the armature between a plurality of a null points.
